# EUROPEAN PATENT SPECIFICATION

(11) **EP 3 616 997 B1**
(45) Date of publication and mention of the grant of the patent: **24.02.2021**
(21) Application number: 18192048.9
(22) Date of filing: 31.08.2018
(51) Int. Cl.: B60R 3/00

(54) **ARRANGEMENT**
ANORDNUNG
AGENCEMENT

(43) Date of publication of application: 04.03.2020
(73) Proprietor: Sandvik Mining and Construction Oy, 33311 Tampere (FI)
(72) Inventor: LIETONEN, Jani, 20101 Turku (FI); LAIHONEN, Esko, 20101 Turku (FI)
(74) Representative: Sandvik

(56) References cited:
- WO-A1-2016/041017
- GB-A- 926 289
- US-A- 4 759 437

## Description

### BACKGROUND

The invention relates to an arrangement for attaching a falling post on a base structure. The invention further relates to a vehicle comprising the arrangement.

Safety railings that can be tilted from their standing position to a lower or recumbent position are widely used in vehicles that have to move in narrow passages. One example of such vehicles are vehicles used in mines. The safety railings are required e.g. during service and maintenance work of a vehicle when personnel has to work on the vehicle, but on the other hand, standing safety railings are vulnerable to be damaged when the vehicle moves in a mine.

A problem with known tilting safety railings is that the tilting operation is complicated and typically not executed by one operator. A locking mechanism for tilting handrails is disclosed in WO 2016/041017.

### BRIEF DESCRIPTION

Viewed from a first aspect, there can be provided an arrangement for attaching a falling post on a base structure, the post being rotatable movable between a standing and a recumbent position, the arrangement comprising a stand, comprising attachment element for attaching the falling post to said base structure, the post attached pivotally to the stand by a pin, the post having an ability to rotate from the standing position to the recumbent position in respect of the stand, the stand comprising at least one groove arranged laterally in respect of the post, the post comprising at least one projection extending in a lateral direction from the post, said at least one groove being arranged in respect of said at least one projection such that when the stand is in the standing position, the at least one projection lies in the at least one groove, and thereby locks the post in said standing position, the at least one projection being attached to the post such that it has an ability to move in respect of the stand in a longitudinal direction of the post an exterior of the stand comprises a guidance surface ending to the at least one groove, and arranged to lift the at least one projection and guide said projection to move in the at least one groove, the arrangement further comprising a lever attached rotatable in the stand, the lever including a first end, length of which is arranged to extend past the guidance surface when the post is in the recumbent position such that the at least one projection arranged to move on the guidance surface is adapted to push the first end of the lever and rotate the lever in first direction therewith, and the at least one projection arranged to push down the first end simultaneously with moving into the at least one groove, such that the post being in the standing position the first end of the lever is situated under the at least one projection lying in the at least one groove, and wherein the lever being activated to rotate in a second direction opposite to the first direction, the first end of the lever is adapted to lift the at least one projection away from the at least one groove, thus allowing the post being moved towards the recumbent position.

Thereby a safety railing that is simple and easy to operate may be achieved.

The arrangement is characterised by what is stated in the characterising part of the independent claim. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

In one embodiment, the at least one projection is arranged in the post movable in longitudinal direction of said post, preferably connected with an actuator arranged in the post and adapted to urge said projection towards the pin and allow said projection being lifted by the guidance surface to move away from the pin. An advantage is that the structure of the post is simple.

In one embodiment, the at least one projection is arranged fixedly in the post, the stand comprises vertically elongated mounting holes for receiving the pin attached to the post, such that the guidance surface is arranged to lift the pin and the post therewith in guidance of said elongated mounting hole. An advantage is that structure of the arrangement is simple.

In one embodiment, the at least one projection is arranged fixedly in the post, the post comprises vertically elongated mounting hole for receiving the pin attached to the stand, such that the guidance surface is arranged to lift the post therewith in guidance of said elongated mounting hole. An advantage is that structure of the arrangement is simple.

In one embodiment, the stand comprises two grooves arranged opposite sides of the stand, and respectively, the post comprises two projections extending opposite directions from the post. An advantage is that a symmetrical and self-adaptable structure may be achieved.

In one embodiment, an upper section of the guidance surface has a convex profile. An advantage is that a continuously smooth movement of the projection may be achieved.

In one embodiment, the at least one groove comprises a rear edge that extends higher from the bottom of the groove than a front edge joining to the guidance surface. An advantage is that a simple means for stopping the movement of the projection may be achieved.

In one embodiment, as the lever is in its extreme position in a second direction of rotation, the first end of the lever is arranged to lie at the at least one groove, such that said first end is limiting length of the at least one groove to a length shorter than width of the projection, the lever thus prohibiting the projection entering in the groove. An advantage is that a simple structure for facilitating of handling of long safety railings may be achieved.

In one embodiment, the lever being dimensioned such that as the first end is limiting said length of the at least one groove to a length shorter than width of the projection, the second end of the lever is lying on the same side with the first end with relation to a vertical imaginary plane arranged in and parallel with a rotational pin of the lever. An advantage is that unintentional movement of the lever may be prevented.

In one embodiment, the lever comprises two first ends and an arc-like connecting piece therebetween, said arc-like connecting piece establishing the second end of the lever. An advantage is that a symmetrical and sturdy structure of the lever may be achieved.

In one embodiment, the lever comprises an extension extending to an opposite side of the stand as the second end of the lever. An advantage is that the arrangement can be operated easily from both sides of the safety railing.

### BRIEF DESCRIPTION OF FIGURES

Some embodiments illustrating the present disclosure are described in more detail in the attached drawings, in which
Figure 1 is a schematic view of a safety railing comprising an arrangement for attaching a falling post of the invention,
Figure 2 is a schematic perspective view of an arrangement for attaching a falling post in a first position,
Figure 3 is a schematic perspective view of the arrangement shown in Figure 2 in a second position,
Figure 4 is a schematic perspective view of the arrangement shown in Figure 2 in a second position,
Figure 5 is a schematic perspective view of the arrangement shown in Figure 2 in a second position,
Figure 6 is a schematic perspective view of the arrangement shown in Figure 2 in a second position,
Figure 7 is a schematic perspective view of the arrangement shown in Figure 2 in a second position,
Figure 8 is a schematic perspective view of the arrangement shown in Figure 2 in a second position,
Figure 9 is a schematic perspective view of another embodiment of the arrangement,
Figure 10 is a schematic perspective view of a third embodiment of the arrangement, and
Figure 11 is a schematic perspective view of a fourth embodiment of the arrangement.

In the figures, some embodiments are shown simplified for the sake of clarity. Similar parts are marked with the same reference numbers in the figures.

### DETAILED DESCRIPTION

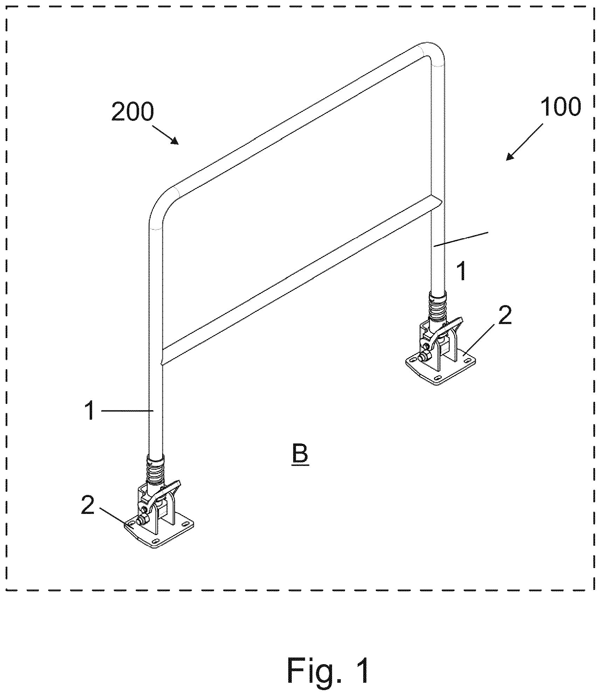

Figure 1 is a schematic view of a safety railing 200 comprising an arrangement 100 for attaching a falling post of the invention and arranged to a vehicle V. The vehicle V is a mining vehicle or a construction vehicle. In mines and at other work sites different type of vehicles are used. The vehicles may be provided with one or more working devices for executing designed work tasks at the work site. The vehicle may be a wheel loader, a transport vehicle or dumper, a rock drilling rig, an excavator or a lifting machine, for example.

However, the vehicle V may be any other type of a utility vehicle, such as a tractor, a truck, a farming machine, a forestry machine etc.

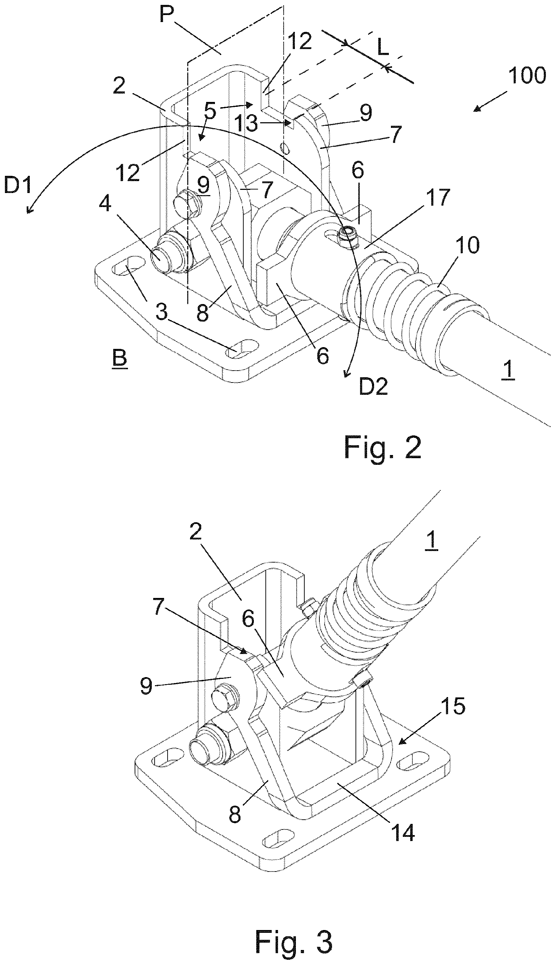

Figures 2 - 8 are schematic perspective views of an arrangement for attaching a falling post in various positions.

The arrangement 100 comprises a stand 2 that has an attachment element 3 for attaching the falling post 1 to a base structure B. The attachment element 3 shown in figures comprises bolt holes but, of course, the attachment element may be realized various ways. The base structure B is a part or component of the vehicle V.

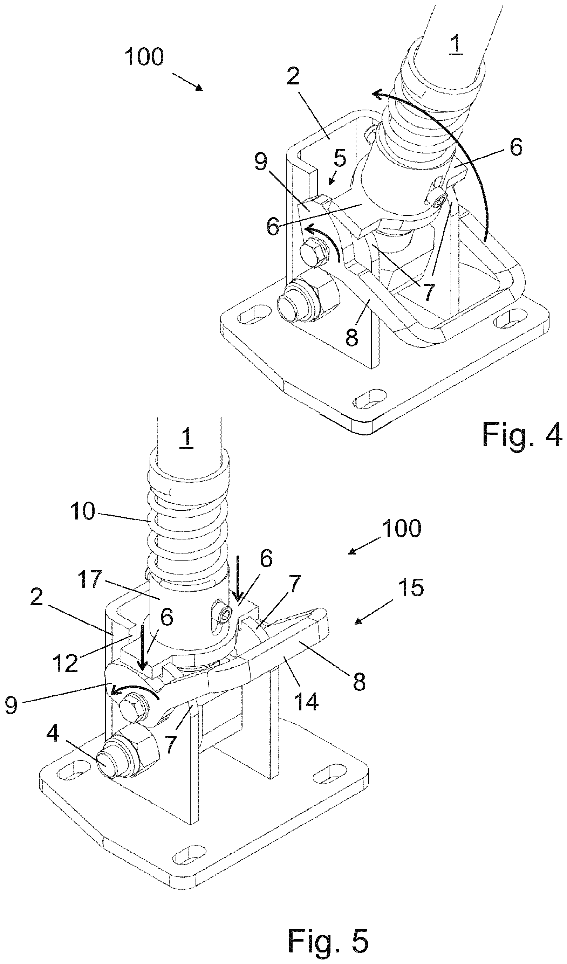

The post 1 is attached pivotally to the stand 2 by a pin or axle 4, the post 1 thus having an ability to rotate from a horizontal position to a vertical position, and vice versa, in respect of the stand 2. The horizontal or recumbent position is shown in Figure 2 and vertical or standing position is shown in Figure 5.

It is to be noted that "vertical or standing position" means here a position where the post 1 lies when the safety railing 200 is arranged for securing safety of personnel, whereas "horizontal or recumbent position" means a position where the safety railing 200 has been lowered or overturned in order to lower the height thereof.

The stand 2 comprises at least one groove 5 arranged laterally in respect of the post 1. In the embodiment shown in Figures, there are two grooves 5 arranged opposite sides of the stand 2.

The post 1 comprises at least one projection 6 extending in a lateral direction from the post 1. In the embodiment shown in Figures, there are two projections 6 extending opposite directions from the post 1.

The grooves 5 are arranged in respect of the projections 6 such that when the post 1 is in the standing position (shown in Figure 5), the projections 6 lie in the grooves 5, and thereby locks the post 1 in the standing position and in respect of the stand 2.

The projections 6 are attached to the post 1 such that they may move in respect of the stand 2 in a longitudinal direction of the post 1. In the embodiment shown in Figures, the projections 6 are attached to a sleeve 17 that glides on the post 1. The sleeve comprises two long apertures and the post 1 a bolt and nut arranged in said apertures. The apertures and the bolt and nut limits and guides the movement of the projections 6 on the post 1. In an embodiment, an actuator 10 is arranged in the post 1. The actuator 10 is adapted to urge the projection(s) 6 towards the pin 4 and allow said projection(s) 6 being lifted by a guidance surface 7 to move away from the pin 4. In the embodiment shown in Figures, the actuator is a coil spring. However, the actuator may also be e.g. mechanical spring of another type, a gas spring etc.

In another embodiment, there are no actuator at all. Instead, the movement of the projection(s) is caused by gravity of the projections 6.

The position and shape of the guidance surface 7 is designed such that the projection (s) 6 of raising post 1 make(s) contact with a convex-shaped upper section of the guidance surface 7. This ensures a smooth and easy lift-up of the post 1, and also a reliable lifting of the projection(s) 6.

In another embodiments, the guidance surface 7 may have different shapes. In an embodiment, the shape is straight.

The exterior of the stand 2 comprises guidance surfaces 7 that end to the grooves 5. The guidance surfaces 7 are adapted to lift (see Figures 3 and 4) the projections 6 during movement of the post 1 from its horizontal position to the vertical position and guide said projections 6 to move in the grooves 5. Furthermore, the pin 4 may be arranged acentrically with respect to the convex-shaped upper sections, such that the distance of upper part of the guidance surface 7 from the pin 4 is more than said distance in lower parts of said surface 7. Thanks to this feature, the projections 6 move away from the pin 4 during the raising of the post 1 and, simultaneously, the actuator 10 is "primed", e.g. in case of spring, the spring is tensioned. The tension is at least partly released when the projections move in the grooves 5.

The arrangement 100 comprises further a lever 8 attached rotatable in the stand 2.

The lever 8 has a first end 9, length of which is arranged to extend past the guidance surface 7 when the post 1 is in the horizontal position. Thus the projections 6 that move on the guidance surface 7 together with raising post will 1 push the first end 9 of the lever and rotate the lever 8 in a first direction D1 therewith (shown in Figure 2) .

The projections 6 push the first ends 9 moving on the respective guidance surfaces 7 ahead (as shown in Figure 4) until the projections 6 reach the grooves 5. Then the projections 6 move or drop into the grooves 5 and, simultaneously, push down the first ends 9 of the lever. As a result, the first ends 9 are situated under the projections 6 settled in the grooves 5. The post 1 and the safety railing 200 is then in the standing position and locked in this position by the projections 6 in the grooves 5 as shown in Figure 5.

The movement of the projections 6 in the first direction D1 may be stopped just above the grooves 5 by a high rear edge 12 of the groove 5. According to an idea, in embodiments comprising two projections, such as shown in Figures, the two projections centre and guide themselves against respective rear edges. Thus plays, if any, in the structure of the post and projections may be eliminated. However, it is to be noted that the high rear edge is not an essential feature of the structure.

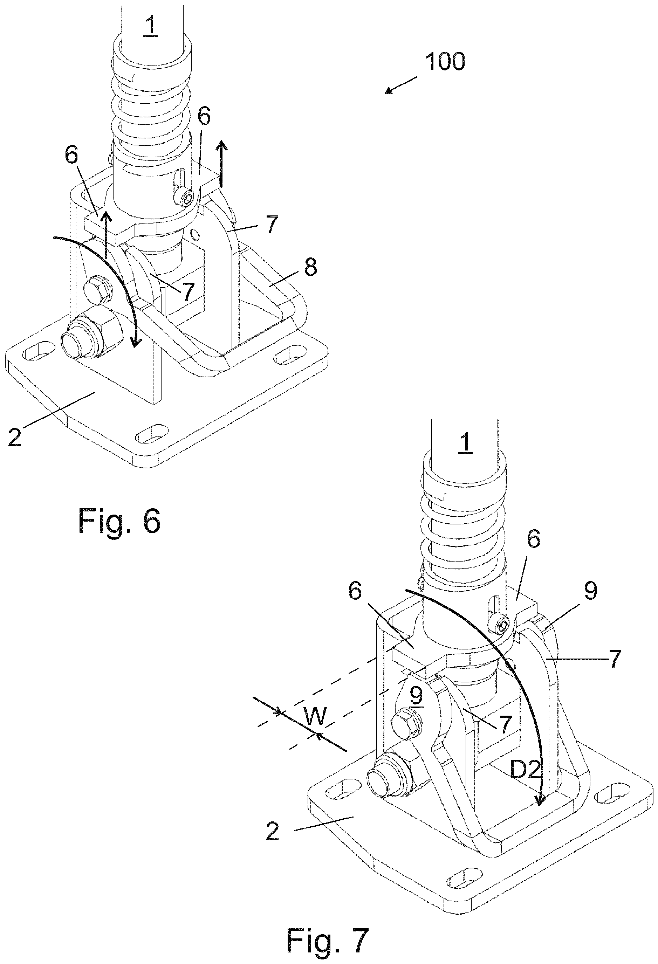

In a case the standing safety railing 200 has to be lowered, the lever 8 is activated to rotate in a second direction D2 opposite to the first direction. The activation may be done by pressing second end of lever 15 e.g. by foot. Then the first ends 9 of the lever are adapted to lift the projections 6 away from the respective grooves 5, as shown in Figure 6. In this position of the projections 6, the post 1 is released and may be turn over to the horizontal position.

The lever 8 shown in Figures comprises two first ends 9 and an arc-like connecting piece 14 connecting the first ends. The arc-like connecting piece 14 establishes the second end 15 of the lever.

The embodiment shown in Figures comprises two grooves 5, two projections 6 and two guidance surfaces 7. In another embodiment, there is only one groove 5, one projection 6 and one guidance surface 7. Basically, it is preferable that the numbers of the grooves, projections and guidance surfaces are equal, but this is not compulsory. According to an idea, as the lever 8 is in its extreme position in a second direction D2 of rotation, the first end 9 thereof is arranged to limit a length L (shown in Figure 2) of the groove 5 to a length shorter than width W (shown in Figure 7) of the projection 6. An example of this kind of position is shown in Figure 7. Thus the lever 8 is prohibiting the projection 6 entering in the groove 5. This may facilitate the operator's work especially when moving a safety railing 200 comprising at least two posts and arrangements 100 from a standing position to recumbent position. As the operator has lifted the projection (s) 6 away from the groove(s) 5 in one arrangement, the projection(s) will not go back spontaneously in said groove (s), but is/are supported by the first end(s) 9. Thus the operator may leave said arrangement and concentrate to operate with a next arrangement 100. This way even a very long safety railing 200 can be turned over by just one operator.

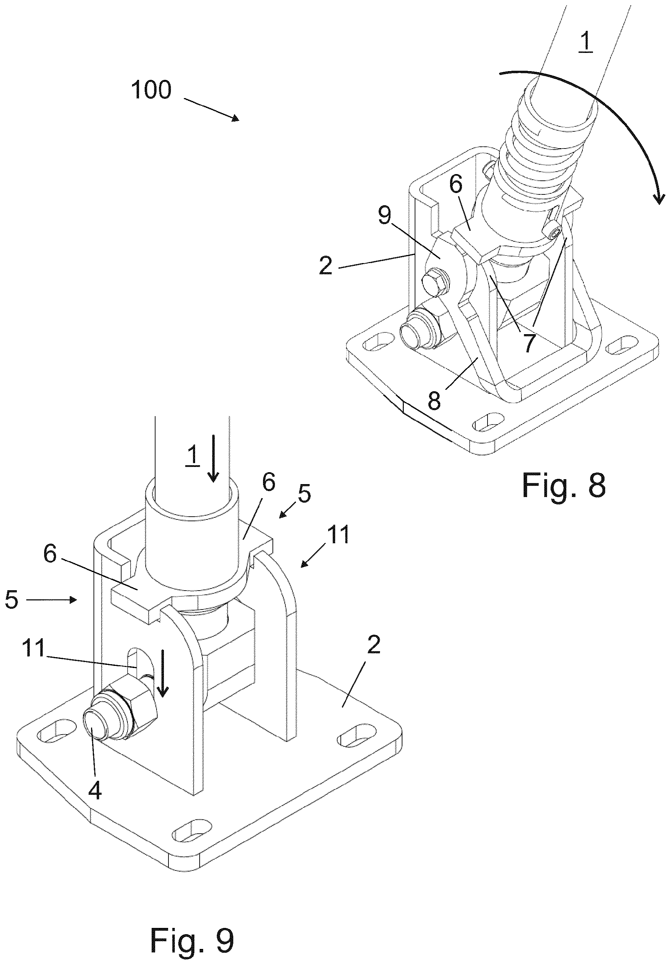

Figure 9 is a schematic perspective view of another embodiment of the arrangement. In an embodiment, the projection 6 is arranged fixedly in the post 1. The stand 2 comprises vertically elongated mounting holes 11 that receives the pin 4 attached to the post 1. The pin 4 and also the post 1 may move in the mounting holes 11 in vertical direction. The guidance surface 7 lifts the projection 6, the pin 4 and the post 1 therewith such that the projection 6 enters at a corresponding groove 5, and then the projection 6 and the post 1 therewith drops in the groove 5.

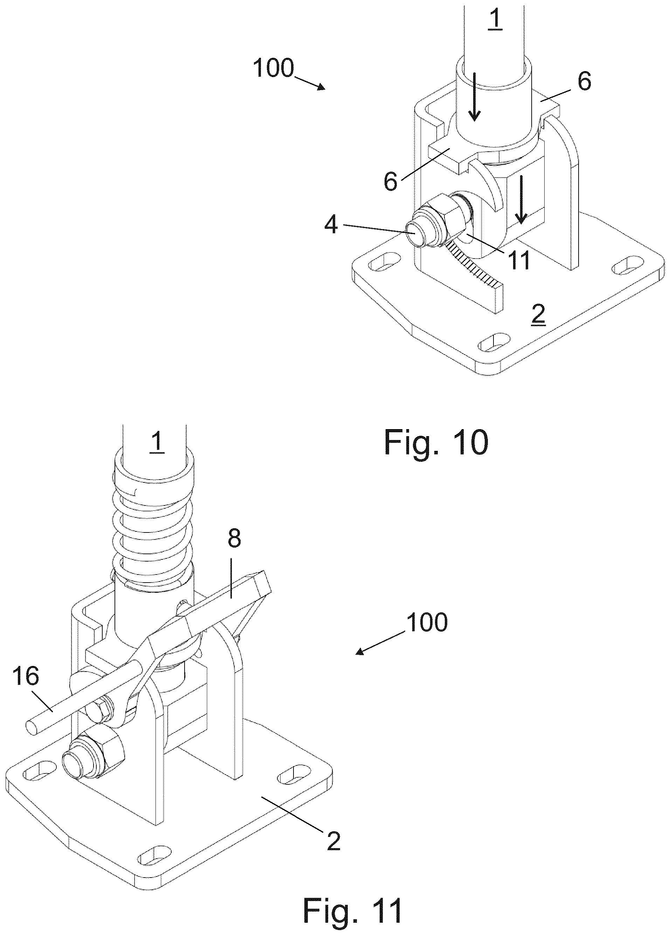

Figure 10 is a schematic perspective view of a third embodiment of the arrangement. In another embodiment, the projection 6 is arranged fixedly in the post 1. The post 1 comprises vertically elongated mounting hole 11 for receiving the pin 4 attached to the stand 2. The post 1 may move in relation to the pin 4 in direction of the elongation. The guidance surface 7 lifts the projection 6 and the post 1 therewith such that the projection 6 enters at a corresponding groove 5, and then the projection 6 and the post 1 therewith drops in the groove 5. It is to be noted that the lever 8 is not shown in Figure 9 in order to simplify the presentation.

Figure 11 is a schematic perspective view of a fourth embodiment of the arrangement. In an embodiment, there is an extension 16 in the lever 8 that extends to an opposite side of the stand 2 as the second end 15 of the lever. Said extension 16 makes it easy to use the arrangement 100 from both sides of the safety railing 200.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive concept as defined by the following claims.

### REFERENCE SYMBOLS

- 1: post
- 2: stand
- 3: attachment element
- 4: pin
- 5: groove
- 6: projection
- 7: guidance surface
- 8: lever
- 9: first end of lever
- 10: actuator
- 11: mounting hole
- 12: rear edge
- 13: front edge
- 14: connecting piece
- 15: second end of lever
- 16: extension
- 17: sleeve

- 100: arrangement
- 200: safety railing

- B: base structure
- D1, D2: direction of rotation
- L: length of groove
- P: plane
- V: vehicle
- W: width of projection

## Claims

1. An arrangement for attaching a falling post (1) on a base structure (B), the post (1) being rotatable movable between a standing and a recumbent position,
the arrangement comprising
- a stand (2), comprising attachment element (3) for attaching the falling post to said base structure,
- the post (1) attached pivotally to the stand (2) by a pin (4), the post having an ability to rotate from the standing position to the recumbent position in respect of the stand,
- the stand (2) comprising at least one groove (5) arranged laterally in respect of the post (1), and
- the post (1) comprising at least one projection (6) extending in a lateral direction from the post,
**characterized in**
- said at least one groove (5) being arranged in respect of said at least one projection (6) such that when the stand is in the standing position, the at least one projection (6) lies in the at least one groove (5), and thereby locks the post (1) in said standing position,
- the at least one projection (6) being attached to the post (1) such that it has an ability to move in respect of the stand (2) in a longitudinal direction of the post (1)
- an exterior of the stand (2) comprises a guidance surface (7) ending to the at least one groove (5), and arranged to lift the at least one projection (6) and guide said projection (6) to move in the at least one groove (5),
- the arrangement (100) further comprising a lever (8) attached rotatable in the stand (2),
- the lever (8) including a first end (9), length of which is arranged to extend past the guidance surface (7) when the post is in the recumbent position such that
- the at least one projection (6) arranged to move on the guidance surface (7) is adapted to push the first end (9) of the lever and rotate the lever (8) in first direction therewith, and
- the at least one projection (6) arranged to push down the first end (9) simultaneously with moving into the at least one groove (5), such that the post (1) being in the standing position the first end (9) of the lever is situated under the at least one projection (6) lying in the at least one groove (5), and wherein
- the lever (8) being activated to rotate in a second direction opposite to the first direction, the first end (9) of the lever is adapted to lift the at least one projection (6) away from the at least one groove (5), thus allowing the post (1) being moved towards the recumbent position.

2. The arrangement as claimed in claim 1, wherein the at least one projection (6) is arranged in the post (1) movable in longitudinal direction of said post (1).

3. The arrangement as claimed in claim 2, wherein an actuator (10) is arranged in the post (1) the actuator (10) adapted to urge said projection (6) towards the pin (4) and allow said projection (6) being lifted by the guidance surface (7) to move away from the pin (4).

4. The arrangement as claimed in claim 1, wherein
- the at least one projection (6) is arranged fixedly in the post,
- the stand (2) comprises vertically elongated mounting holes (11) for receiving the pin (4) attached to the post (1), such that
- the guidance surface (7) is arranged to lift the pin (4) and the post (1) therewith in guidance of said elongated mounting hole (11).

5. The arrangement as claimed in claim 1, wherein
- the at least one projection (6) is arranged fixedly in the post (1),
- the post (1) comprises vertically elongated mounting hole (11) for receiving the pin (4) attached to the stand (2), such that
- the guidance surface (7) is arranged to lift the post (1) therewith in guidance of said elongated mounting hole (11) .

6. The arrangement as claimed in any of the preceding claims, wherein the stand (2) comprises two grooves (5) arranged opposite sides of the stand, and repectively,
- the post (1) comprises two projections (6) extending opposite directions from the post.

7. The arrangement as claimed in any of the preceding claims, wherein an upper section of the guidance surface (7) has a convex profile.

8. The arrangement as claimed in any of the preceding claims, wherein the at least one groove (5) comprises a rear edge (12) that extends higher from the bottom of the groove (5) than a front edge (13) joining to the guidance surface (7).

9. The arrangement as claimed in any of the preceding claims, wherein
- as the lever (8) is in its extreme position in a second direction (D2) of rotation,
- the first end (9) of the lever is arranged to lie at the at least one groove (5),
- such that said first end (9) is limiting length (L) of the at least one groove (5) to a length shorter than width (W) of the projection (6),
- the lever (8) thus prohibiting the projection (6) entering in the groove (5).

10. The arrangement as claimed in claim 9, wherein
- the lever (8) being dimensioned such that as the first end (9) is limiting said length (L) of the at least one groove (5) to a length shorter than width (W) of the projection (6),
- the second end (15) of the lever is lying on the same side with the first end (9) with relation to a vertical imaginary plane (P) arranged in and parallel with a rotational pin (16) of the lever (8).

11. The arrangement as claimed in any of the preceding claims, wherein the lever (8) comprises two first ends (9) and an arc-like connecting piece (14) therebetween, said arc-like connecting piece establishing the second end (15) of the lever.

12. The arrangement as claimed in any of the preceding claims, wherein the lever (8) comprises an extension (16) extending to an opposite side of the stand (2) as the second end (15) of the lever.

13. The arrangement as claimed in any of the preceding claims, wherein the pin (4) is arranged acentrically with respect to the guidance surface (7), such that the distance of upper part of the guidance surface (7) from the pin 4 is more than said distance in lower parts of said guidance surface (7).

14. A vehicle (V), comprising the arrangement (100) as claimed in any of the preceding claims.

15. The vehicle as claimed in claim 14, wherein the vehicle (V) is a mining vehicle, and wherein the arrangement (100) is arranged in a safety railing (200) of said mining vehicle.

## Patentansprüche

1. Anordnung zur Befestigung eines fallenden Pfostens (1) auf einer Basisstruktur (B), wobei der Pfosten (1) zwischen einer stehenden und einer liegenden Position drehbar beweglich ist,
wobei die Anordnung umfasst
- einen Ständer (2), umfassend ein Befestigungselement (3) zum Befestigen des fallenden Pfostens an der Basisstruktur,
- den Pfosten (1) schwenkbar an dem Ständer (2) durch einen Stift (4) befestigt, wobei der Pfosten eine Fähigkeit aufweist, aus der stehenden Position zu der liegenden Position in Bezug auf den Ständer zu drehen,
- den Ständer (2), der mindestens eine Kerbe (5) umfasst, die seitlich in Bezug auf den Pfosten (1) angeordnet ist, und
- den Pfosten (1), der mindestens einen Fortsatz (6) umfasst, der sich in einer seitlichen Richtung von dem Pfosten erstreckt,
**dadurch gekennzeichnet, dass**
- die mindestens eine Kerbe (5) in Bezug auf den mindestens einen Fortsatz (6) so angeordnet ist, dass, wenn der Ständer in der stehenden Position ist, der mindestens eine Fortsatz (6) in der mindestens einen Kerbe (5) liegt und dadurch den Pfosten (1) in der stehenden Position verriegelt,
- der mindestens eine Fortsatz (6) an dem Pfosten (1) so befestigt ist, dass er die Fähigkeit aufweist, sich in Bezug auf den Ständer (2) in einer Längsrichtung des Pfostens (1) zu bewegen,
- eine Außenseite des Ständers (2) eine Führungsfläche (7) aufweist, die an der mindestens einen Kerbe (5) endet und angeordnet ist, den mindestens einen Fortsatz (6) anzuheben und den Fortsatz (6) zu führen, sich in die mindestens eine Kerbe (5) zu bewegen,
- die Anordnung (100) weiter einen Hebel (8) umfasst, der drehbar in dem Ständer (2) befestigt ist,
- der Hebel (8) ein erstes Ende (9) beinhaltet, dessen Länge angeordnet ist, sich über die Führungsfläche (7) hinaus zu erstrecken, wenn sich der Pfosten in der liegenden Position befindet, sodass
- der mindestens eine Fortsatz (6), der angeordnet ist, sich auf der Führungsfläche (7) zu bewegen, ausgebildet ist, das erste Ende (9) des Hebels anzuschieben und den Hebel (8) damit in erster Richtung zu drehen, und
- der mindestens eine Fortsatz (6) angeordnet ist, das erste Ende (9) gleichzeitig mit Bewegung in die mindestens eine Kerbe (5) nach unten zu schieben, sodass, wenn der Pfosten (1) in der stehenden Position ist, das erste Ende (9) des Hebels unter dem mindestens einen Fortsatz (6) gelegen ist, der in der mindestens einen Kerbe (5) liegt, und wobei
- der Hebel (8) aktiviert wird, um in einer zweiten Richtung, der ersten Richtung entgegengesetzt, zu drehen, wobei das erste Ende (9) des Hebels ausgebildet ist, den mindestens einen Fortsatz (6) von der mindestens einen Kerbe (5) abzuheben, sodass der Pfosten (1) zu der liegenden Position bewegt werden kann.

2. Anordnung nach Anspruch 1, wobei der mindestens eine Fortsatz (6) in dem Pfosten (1) in Längsrichtung des Pfostens (1) beweglich angeordnet ist.

3. Anordnung nach Anspruch 2, wobei ein Stellglied (10) in dem Pfosten (1) angeordnet ist, wobei das Stellglied (10) ausgebildet ist, den Fortsatz (6) zu dem Stift (4) zu pressen und dem Fortsatz (6) zu erlauben, durch die Führungsfläche (7) angehoben zu werden, um sich von dem Stift (4) wegzubewegen.

4. Anordnung nach Anspruch 1, wobei
- der mindestens eine Fortsatz (6) in dem Pfosten fixiert angeordnet ist,
- der Ständer (2) vertikal längliche Montagelöcher (11) zum Aufnehmen des Stifts (4), der am Pfosten (1) befestigt ist, umfasst, sodass
- die Führungsfläche (7) angeordnet ist, den Stift (4) und damit den Pfosten (1) in Führung des länglichen Montagelochs (11) anzuheben.

5. Anordnung nach Anspruch 1, wobei
- der mindestens eine Fortsatz (6) in dem Pfosten (1) fixiert angeordnet ist,
- der Pfosten (1) vertikal längliche Montagelöcher (11) zum Aufnehmen des Stifts (4), der am Ständer (2) befestigt ist, umfasst, sodass
- die Führungsfläche (7) angeordnet ist, den Pfosten (1) damit in Führung des länglichen Montagelochs (11) anzuheben.

6. Anordnung nach einem der vorstehenden Ansprüche, wobei der Ständer (2) zwei Kerben (5) umfasst, die an gegenüberliegenden Seiten des Ständers angeordnet sind, und bzw.,
- der Pfosten (1) zwei Fortsätze (6) umfasst, die sich in entgegengesetzten Richtungen von dem Pfosten erstrecken.

7. Anordnung nach einem der vorstehenden Ansprüche, wobei ein oberer Abschnitt der Führungsfläche (7) ein konvexes Profil aufweist.

8. Anordnung nach einem der vorstehenden Ansprüche, wobei die mindestens eine Kerbe (5) eine hintere Kante (12) umfasst, die sich von dem Boden der Kerbe (5) höher erstreckt als eine vordere Kante (13), die mit der Führungsfläche (7) verbunden ist.

9. Anordnung nach einem der vorstehenden Ansprüche, wobei
- wenn der Hebel (8) in seiner extremen Position in einer zweiten Drehrichtung (D2) ist,
- das erste Ende (9) des Hebels angeordnet ist, an der mindestens einen Kerbe (5) zu liegen,
- sodass das erste Ende (9) Länge (L) der mindestens einen Kerbe (5) auf eine Länge begrenzt, die kürzer als Breite (W) des Fortsatzes (6) ist,
- der Hebel (8) dadurch ein Eindringen des Fortsatzes (6) in die Kerbe (5) verhindert.

10. Anordnung nach Anspruch 9, wobei
- der Hebel (8) so dimensioniert ist, dass, wenn das erste Ende (9) die Länge (L) der mindestens einen Kerbe (5) auf eine Länge begrenzt, die kürzer als Breite (W) des Fortsatzes (6) ist,
- das zweite Ende (15) des Hebels an derselben Seite mit dem ersten Ende (9) in Bezug auf eine imaginäre vertikale Ebene (P) liegt, die in und parallel mit einem Drehstift (16) des Hebels (8) angeordnet ist.

11. Anordnung nach einem der vorstehenden Ansprüche, wobei der Hebel (8) zwei erste Enden (9) und ein bogenförmiges Verbindungsstück (14) dazwischen umfasst, wobei das bogenförmige Verbindungsstück das zweite Ende (15) des Hebels bildet.

12. Anordnung nach einem der vorstehenden Ansprüche, wobei der Hebel (8) eine Verlängerung (16) umfasst, die sich zu einer gegenüberliegenden Seite des Ständers (2) als das zweite Ende (15) des Hebels erstreckt.

13. Anordnung nach einem der vorstehenden Ansprüche, wobei der Stift (4) azentrisch in Bezug auf die Führungsfläche (7) angeordnet ist, sodass der Abstand von oberem Teil der Führungsfläche (7) von dem Stift 4 mehr ist als der Abstand in unteren Teilen der Führungsfläche (7).

14. Fahrzeug (V), umfassend die Anordnung (100) nach einem der vorstehenden Ansprüche.

15. Fahrzeug nach Anspruch 14, wobei das Fahrzeug (V) ein Bergbaufahrzeug ist und wobei die Anordnung (100) in einem Schutzgeländer (200) des Bergbaufahrzeugs angeordnet ist.

## Revendications

1. Agencement pour fixer un poteau tombant (1) sur une structure de base (B), le poteau (1) étant mobile de manière rotative entre une position debout et une position couchée,
l'agencement comprenant
- un support (2), comprenant un élément d'attache (3) pour attacher le poteau tombant à ladite structure de base,
- le poteau (1) attaché de manière pivotante au support (2) par une goupille (4), le poteau ayant une capacité de rotation de la position debout à la position couchée par rapport au support,
- le support (2) comprenant au moins une rainure (5) agencée latéralement par rapport au poteau (1), et
- le poteau (1) comprenant au moins une saillie (6) s'étendant dans une direction latérale à partir du poteau,
**caractérisé en ce que**
- ladite au moins une rainure (5) est agencée par rapport à ladite au moins une saillie (6) de sorte que lorsque le support est en position debout, l'au moins une saillie (6) repose dans l'au moins une rainure (5) et verrouille ainsi le poteau (1) dans ladite position debout,
- l'au moins une saillie (6) est attachée au poteau (1) de sorte qu'elle a une capacité de déplacement par rapport au support (2) dans une direction longitudinale du poteau (1)
- un extérieur du support (2) comprend une surface de guidage (7) se terminant à l'au moins une rainure (5) et agencée pour lever l'au moins une saillie (6) et guider ladite saillie (6) pour se déplacer dans l'au moins une rainure (5),
- l'agencement (100) comprenant en outre un levier (8) attaché de manière rotative dans le support (2),
- le levier (8) incluant une première extrémité (9), dont la longueur est agencée pour s'étendre au-delà de la surface de guidage (7) lorsque le poteau est en position couchée de sorte que
- l'au moins une saillie (6) agencée pour se déplacer sur la surface de guidage (7) est adaptée pour pousser la première extrémité (9) du levier et faire tourner le levier (8) dans la première direction associée, et
- l'au moins une saillie (6) agencée pour pousser vers le bas la première extrémité (9) simultanément avec le déplacement dans l'au moins une rainure (5), de sorte que le poteau (1) étant en position debout, la première extrémité (9) du levier est située sous l'au moins une saillie (6) reposant dans l'au moins une rainure (5), et dans lequel
- le levier (8) étant activé pour tourner dans une seconde direction opposée à la première direction, la première extrémité (9) du levier est adaptée pour lever l'au moins une saillie (6) à l'écart de l'au moins une rainure (5), permettant ainsi au poteau (1) d'être déplacé vers la position couchée.

2. Agencement selon la revendication 1, dans lequel l'au moins une saillie (6) est agencée dans le poteau (1) mobile dans la direction longitudinale dudit poteau (1).

3. Agencement selon la revendication 2, dans lequel un actionneur (10) est agencé dans le poteau (1), l'actionneur (10) étant adapté pour pousser ladite saillie (6) vers la goupille (4) et permettre à ladite saillie (6) d'être levée par la surface de guidage (7) pour s'éloigner de la goupille (4).

4. Agencement selon la revendication 1, dans lequel
- l'au moins une saillie (6) est agencée de manière fixe dans le poteau,
- le support (2) comprend des trous de montage allongés verticalement (11) pour recevoir la goupille (4) attachée au poteau (1), de sorte que
- la surface de guidage (7) est agencée pour lever la goupille (4) et le poteau (1) associé en guidant ledit trou de montage allongé (11).

5. Agencement selon la revendication 1, dans lequel
- l'au moins une saillie (6) est agencée de manière fixe dans le poteau (1),
- le poteau (1) comprend un trou de montage allongé verticalement (11) pour recevoir la goupille (4) attachée au support (2), de sorte que
- la surface de guidage (7) est agencée pour lever le poteau (1) associé en guidant ledit trou de montage allongé (11).

6. Agencement selon l'une quelconque des revendications précédentes, dans lequel le support (2) comprend deux rainures (5) agencées sur les côtés opposés du support, et respectivement,
- le poteau (1) comprend deux saillies (6) s'étendant dans des directions opposées à partir du poteau.

7. Agencement selon l'une quelconque des revendications précédentes, dans lequel une section supérieure de la surface de guidage (7) a un profil convexe.

8. Agencement selon l'une quelconque des revendications précédentes, dans lequel l'au moins une rainure (5) comprend un bord arrière (12) qui s'étend plus haut à partir du fond de la rainure (5) qu'un bord avant (13) se joignant à la surface de guidage (7).

9. Agencement selon l'une quelconque des revendications précédentes, dans lequel
- lorsque le levier (8) est dans sa position extrême dans une seconde direction (D2) de rotation,
- la première extrémité (9) du levier est agencée pour reposer au niveau de l'au moins une rainure (5),
- de sorte que ladite première extrémité (9) limite la longueur (L) de l'au moins une rainure (5) à une longueur inférieure à la largeur (W) de la saillie (6),
- le levier (8) empêchant ainsi la saillie (6) d'entrée dans la rainure (5).

10. Agencement selon la revendication 9, dans lequel
- le levier (8) étant dimensionné de sorte que lorsque la première extrémité (9) limite ladite longueur (L) de l'au moins une rainure (5) à une longueur inférieure à la largeur (W) de la saillie (6),
- la seconde extrémité (15) du levier repose du même côté que la première extrémité (9) par rapport à un plan imaginaire vertical (P) agencé dans et parallèlement à une goupille de rotation (16) du levier (8).

11. Agencement selon l'une quelconque des revendications précédentes, dans lequel le levier (8) comprend deux premières extrémités (9) et une pièce de connexion en forme d'arc (14) entre elles, ladite pièce de connexion en forme d'arc établissant la seconde extrémité (15) du levier.

12. Agencement selon l'une quelconque des revendications précédentes, dans lequel le levier (8) comprend une extension (16) s'étendant vers un côté opposé du support (2) en tant que seconde extrémité (15) du levier.

13. Agencement selon l'une quelconque des revendications précédentes, dans lequel la goupille (4) est agencée de manière acentrique par rapport à la surface de guidage (7), de sorte que la distance de la partie supérieure de la surface de guidage (7) à la goupille 4 est supérieure à ladite distance dans les parties inférieures de ladite surface de guidage (7).

14. Véhicule (V), comprenant l'agencement (100) selon l'une quelconque des revendications précédentes.

15. Véhicule selon la revendication 14, dans lequel le véhicule (V) est un véhicule minier, et dans lequel l'agencement (100) est agencé dans un garde-corps de sécurité (200) dudit véhicule minier.
